# EUROPÄISCHE PATENTSCHRIFT

(11) **EP 2 525 943 B1**
(45) Veröffentlichungstag und Bekanntmachung des Hinweises auf die Patenterteilung: **19.03.2014**
(21) Anmeldenummer: 11711015.5
(22) Anmeldetag: 21.01.2011
(51) Int. Cl.: B23Q 1/54, B23Q 5/04

(54) **DOPPELSCHWENKWECHSELADAPTER**
DOUBLE-PIVOT CHANGING ADAPTER
ADAPTATEUR DE CHANGEMENT DE PIVOTEMENT DOUBLE

(30) Priorität: 22.01.2010 DE 102010005569
(43) Veröffentlichungstag der Anmeldung: 28.11.2012
(73) Patentinhaber: Benz GmbH, Werkzeugsysteme, 77716 Haslach (DE)
(72) Erfinder: ZIMMER, Günther, 77866 Rheinau (DE); ZIMMER, Martin, 77866 Rheinau (DE)
(74) Vertreter: Thämer, Wolfgang
(86) Internationale Anmeldenummer: PCT/DE2011/000065
(87) Internationale Veröffentlichungsnummer: WO 2011/088826

(56) Entgegenhaltungen:
- DE-A1-102006 030 159
- DE-A1-102006 039 751
- DE-B3-102004 062 138

## Beschreibung

Die Erfindung betrifft einen Doppelschwenkwechseladapter zum austauschbaren Einwechseln eines Werkzeugschwenkaggregats in ein Hauptspindelaggregat, mit einem Werkzeugschwenkaggregat, das einen in einem Schwenkaggregategehäuse gelagerten Schwenkkopf hat, in dem eine antreib- und drehbare Werkzeugaufnahme angeordnet ist, wobei der Schwenkkopf im Schwenkaggregategehäuse mittels eines Schwenkgetriebes um eine quer zur Mittellinie der Aggregatespindel des Werkzeugschwenkaggregats orientierte Schwenkachse um mindestens 100 Winkelgrade schwenkbar ist.

Aus der DE 10 2004 062 138 B3 ist ein Wechseladapter mit einem daran adaptierten Werkzeugschwenkaggregat bekannt. Das Werkzeugschwenkaggregat selbst ist über den Wechseladapter um eine vertikale Achse schwenkbar am Maschinenschlitten einer Werkzeugmaschine gelagert. Im Gehäuse des Werkzeugschwenkaggregats sitzt ein um eine horizontale Achse schwenkbarer Schwenkkopf. Das Werkzeugschwenkaggregat und sein Schwenkkopf werden von einem einzigen Servomotor angetrieben. Die Rotationsbewegung des Servomotors wird über ein elektrisch schaltbares Getriebe entweder zum Schwenken des Schwenkkopfes oder für die Rotationsbewegung des Werkzeugschwenkaggregats verwendet. Das Schwenken des Schwenkkopfes ist hierbei nur eine reine Verstellbewegung, für die das Werkzeugschwenkaggregat gegenüber dem Wechseladapter in eine bestimmte Position geschwenkt werden muss.

Der vorliegenden Erfindung liegt die Problemstellung zugrunde, ein Doppelschwenkwechseladapter zu entwickeln, der ein übliches, auswechselbares Werkzeugschwenkaggregat, das einen um eine zweite Mittellinie schwenkbaren Schwenkkopf mit Werkzeugaufnahme aufweist und keinen eigenen Antrieb hat, von außen so manipuliert, dass die Werkzeugaufnahme neben ihrer regulären Rotation um ihre eigene erste Mittellinie um eine zweite, zu dieser senkrechte Mittellinie eine Arbeitsbewegung durchführen kann.

Diese Problemstellung wird mit den Merkmalen des Anspruchs 1 gelöst. Dazu hat der Doppelschwenkwechseladapter einen ersten Antrieb, der das Werkzeugschwenkaggregat um die Mittellinie der Aggregatespindel in jeder Rotationsrichtung um jeden beliebigen Schwenkwinkel schwenkbar macht, wobei der Schwenkwinkel gleich groß oder größer ist, als der kleinste ansteuer- oder ausregelbare Verstellwinkel dieses Antriebs. Der Doppelschwenkwechseladapter hat ferner einen zweiten Antrieb, der ein an einem Antriebselement des schwenkkopfeigenen Schwenkgetriebes ankuppelbares Mitnahmeelement in jeder Rotationsrichtung um die Mittellinie der Aggregatespindel um jeden beliebigen Schwenkwinkel schwenkbar macht, der gleich groß oder größer ist als der kleinste ansteuer- oder ausregelbare Verstellwinkel dieses Antriebs. Die beiden Antriebe sind synchron und asynchron zueinander antreibbar.

Mit dem erfindungsgemäßen Doppelschwenkwechseladapter werden einem am Hauptspindelaggregat einer Werkzeugmaschine einwechselbar gelagertes Werkzeugschwenkaggregat, das keinen eigenen Antrieb hat, zwei im oder am Gehäuse des Doppelschwenkwechseladapters untergebrachte Antriebe zur Verfügung gestellt. Die an entsprechende Kupplungen des Werkzeugschwenkaggregats andockenden Kupplungsgegenstücke der doppelschwenkwechseladapterseitigen Antriebe können ein Werkzeug, das in der Werkzeugaufnahme des Werkzeugschwenkaggregats eingespannt ist, unter Last - bei ortsfestem Hauptspindelaggregat - so antreiben, dass die Spitze des Werkzeuges jeden Punkt einer gekrümmten Raumfläche erreicht, die die Form eines Kugelabschnitts hat. Die Höhe des Kugelabschnitts ist dabei größer als der Kugelradius.

Für eine stetige Bewegung der Spitze des Werkzeuges auf dieser gedachten Raumfläche überlagern sich die Bewegungen der beiden Antriebe, sobald die Bewegung der Werkzeugspitze eine Komponente hat, die parallel zur Höhe des Kugelabschnitts orientiert ist.

Weitere Einzelheiten der Erfindung ergeben sich aus den Unteransprüchen. Es folgt die Beschreibung eines zumindest teilweise schematisch dargestellten Ausführungsbeispiels.
- Figur 1:: Hauptspindelgehäuse mit einem Doppelschwenkwechseladapter und eingewechseltem Werkzeugschwenkaggregat;
- Figur 2:: wie Figur 1, jedoch um 135 Winkelgrade geschwenkt, von der Werkzeugaufnahme aus gesehen;
- Figur 3:: wie Figur 2, jedoch um 90 Winkelgrade geschwenkt, von der Werkzeugaufnahme aus gesehen;
- Figur 4:: Ausschnittvergrößerung zu Figur 2, jedoch mit verschwenktem Schwenkkopf und dem schematisch dargestellten Schwenkgetriebe;
- Figur 5:: Ausschnittvergrößerung zu Figur 3, mit dem schematisch dargestellten werkzeugschwenkaggregateseitigen Getriebe für den Antrieb der Werkzeugaufnahme;
- Figur 6:: Schnitt eines Werkstückes mit einer Kugelkappenausfräsung.

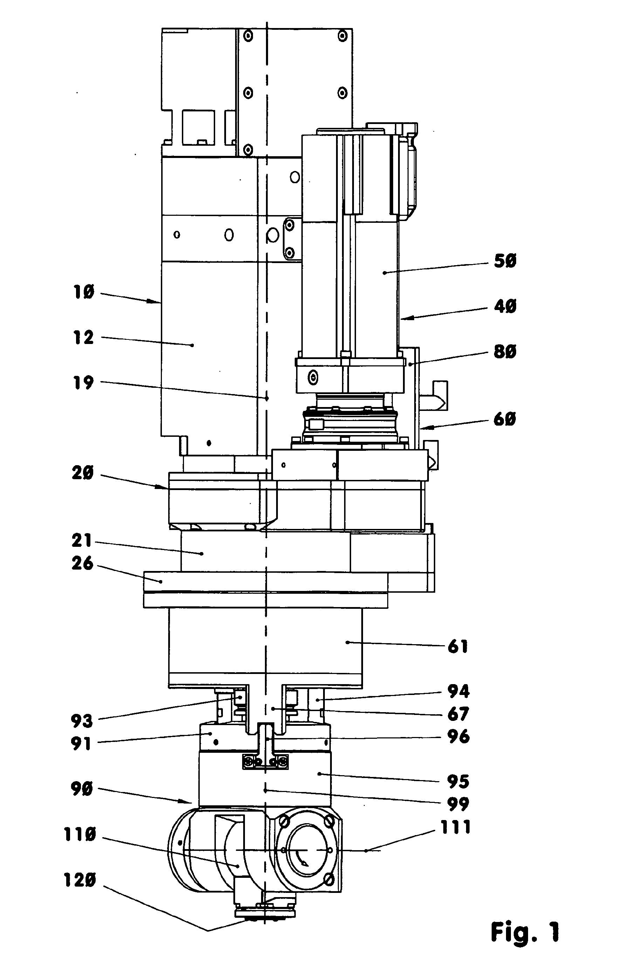

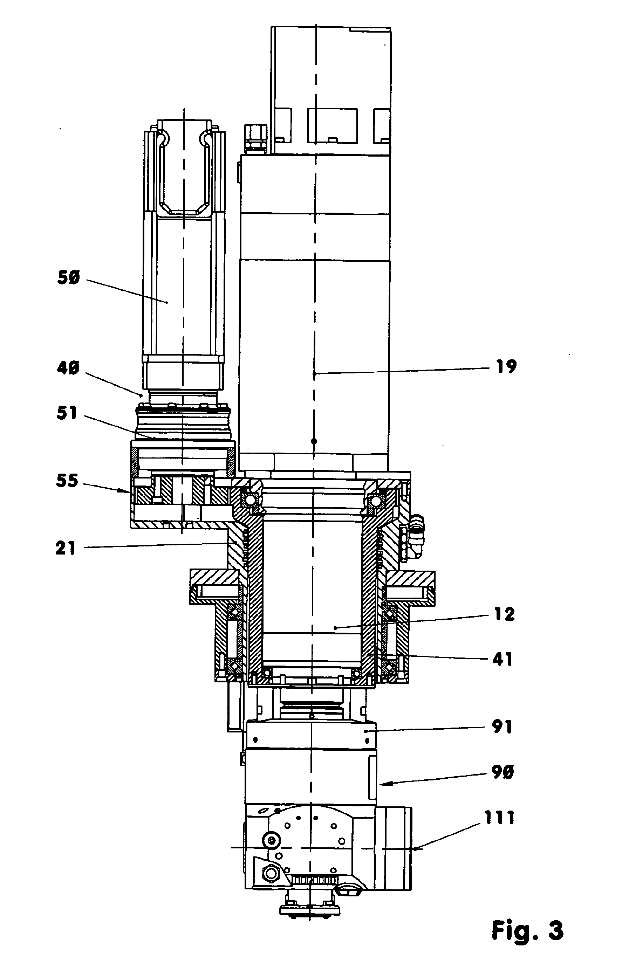

Die Figur 1 zeigt in der Seitenansicht eine Kombination aus einem Hauptspindelaggregat (10), einem Doppelschwenkwechseladapter (20) und einem Werkzeugschwenkaggregat (90). Das Hauptspindelaggregat (10) ist über eine plane Flanschfläche (11), vgl. Figur 3, seines Gehäuses (12) am einem - hier nicht dargestellten - Schlitten einer Werkzeugmaschine angeflanscht.

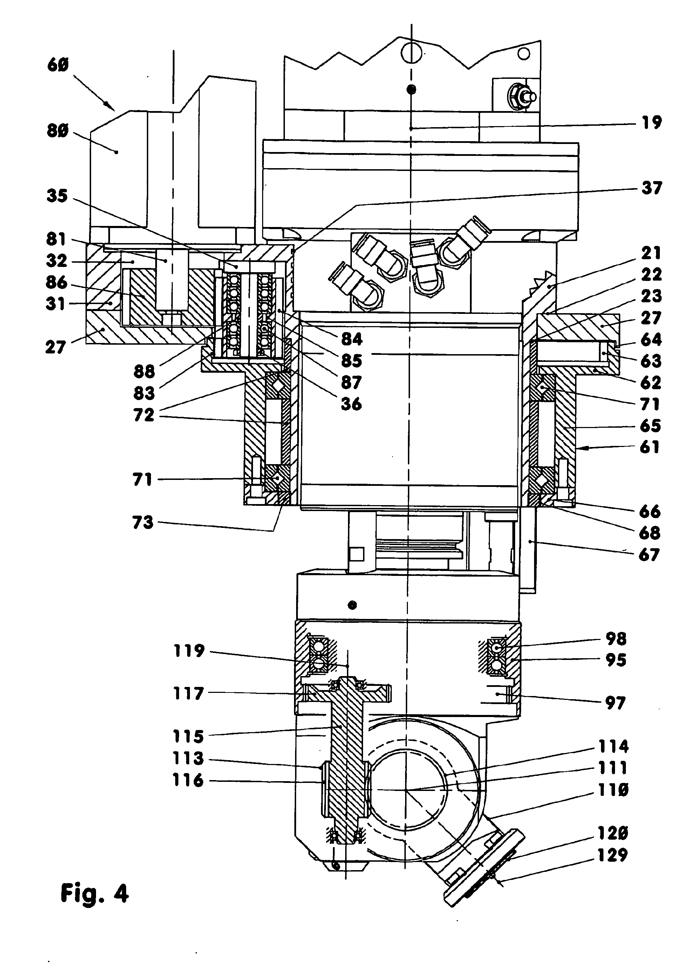

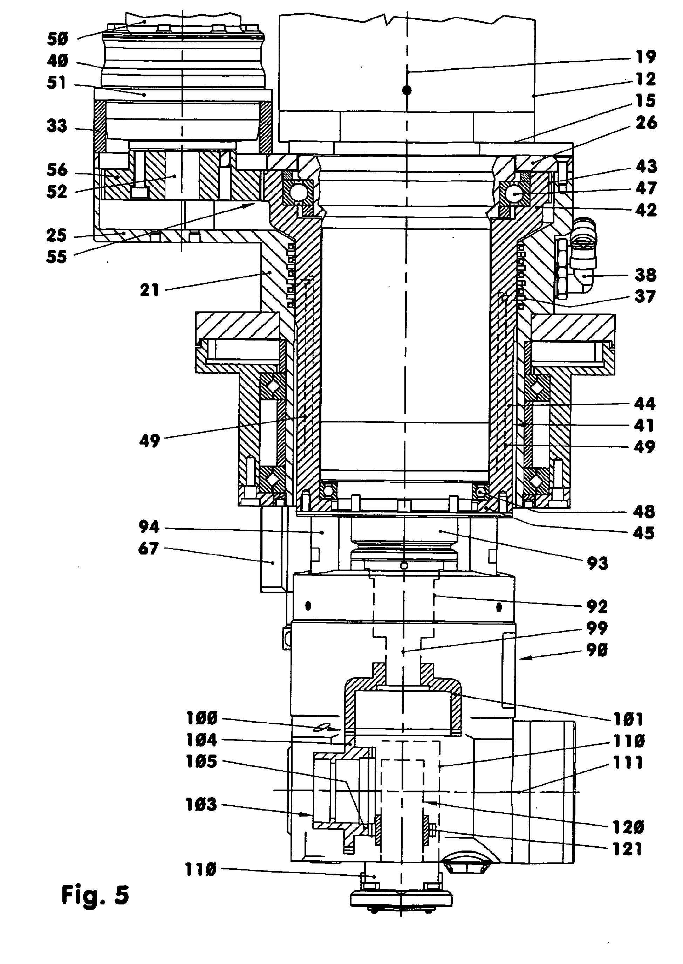

Die z.B. vertikal ausgerichtete Hauptspindel des Hauptspindelaggregats (10), in den Figuren 1 bis 5 nicht dargestellt, rotiert hier um eine Mittellinie (19). Die Hauptspindel trägt das Werkzeugschwenkaggregat (90) über dessen Hohlschaftkegel (93). Sie treibt über ein werkzeugschwenkaggregateseitiges Getriebe (100), vgl. Figur 5, untere Hälfte der Darstellung, eine Werkzeugaufnahme (120) an. Die Werkzeugaufnahme (120) selbst sitzt in einem Schwenkkopf (110), der um eine, hier z.B. horizontale Mittellinie (111), z.B. um 0 bis mindestens 110 Winkelgrade schwenkbar ist. Das hierzu erforderliche Schwenkgetriebe (113) ist in Figur 4, untere Hälfte, gezeigt.

Auf dem Gehäuse (12) des Hauptspindelaggregats (10) ist eine Schwenkbüchse (41) gelagert, vgl. Figur 3, die von einem Motor (50) mit mindestens einem Vorgelegegetriebe (51, 55) elektronisch geregelt und/oder gesteuert antreibbar ist. Die Schwenkbüchse (41) verschwenkt das Gehäuse (91) des Werkzeugschwenkaggregats (90) um die Mittellinie (19) der Hauptspindel. Der Schwenkwinkel und die Rotationsrichtung ist beliebig. Der Motor (50), seine Vorgelegegetriebe (51, 55) und die Schwenkbüchse (41) stellen eine C1-Achse dar.

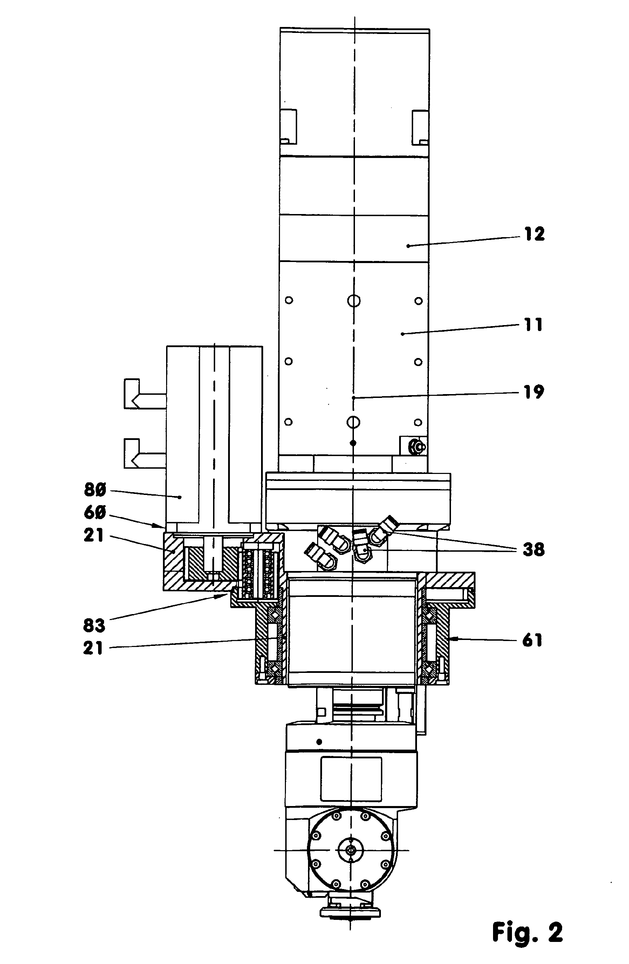

Um die Schwenkbüchse (41) herum, vgl. Figur 2, befindet sich ein Wechseladaptergehäuse (21), auf dem ein Antriebsring (61) gelagert ist. Der Antriebsring (61) wird u.a. von einem Hohlradgetriebe (83) über einen Motor (80) elektronisch geregelt und/oder gesteuert angetrieben, vgl. auch Figur 4, Figurenmitte. Der Antriebsring (61) ist gegenüber der Mittellinie (19) der Hauptspindel um jeden beliebigen Winkel in beide Rotationsrichtungen verstellbar. Der Motor (80), das oder die nachgeschalteten von ihm angetriebenen Getriebe (83) und der Antriebsring (61) stellen eine C2-Achse dar.

Der Antriebsring (61) trägt z.B. ein gabelförmiges Kupplungsstück (67), mit dem er an einem Umlaufring (95) des Werkzeugschwenkaggregats (90) gekuppelt ist. Der Umlaufring (95) treibt das Schwenkgetriebe (113) des Schwenkkopfes (110) an.

Um die C1-Achse zu realisieren, vgl. Figur 5, ist auf dem Gehäuse (12) der Hauptspindel, unterhalb eines Gehäusebundes (15), die Schwenkbüchse (41) gelagert. Die Schwenkbüchse (41) besteht aus einem Rohrabschnitt (44), einem Bodenabschnitt (45) und einem Flanschabschnitt (42). Im Bereich des Flanschabschnittes (42) ist die Schwenkbüchse (41) in einem Festlager (47) auf dem Hauptspindelgehäuse (12) gelagert. In der Nähe des Bodenabschnitts (45) ist ein Rillenkugellager (48) als Loslager angeordnet. Im Bereich des Bodenabschnittes (45) befinden sich Druckluftkupplungen, über die Druckluft an das Werkzeugschwenkaggregat (90) übertragen wird. Die Druckluftkupplungen sind an einem Kanalsystem (49) - hier nur gestrichelt angedeutet - angeschlossen, das im oberen Bereich des Rohrabschnittes (44) in z.B. vier radialen Kanälen an der Außenwandung dieses Rohrabschnittes (44) endet.

Die Schwenkbüchse (41) ist von dem im Wesentlichen rohrförmigen Wechseladaptergehäuse (21) umgeben. Dieses Gehäuse (21) ist an dem Gehäusebund (15) des Hauptspindelgehäuses (12) starr angeordnet.

Im mittleren Bereich des Wechseladaptergehäuses (21) befinden sich in der Innenwandung vier nebeneinander liegende und gegeneinander abgedichtete Ringnuten (37). Die Ringnuten (37) liegen vor den radialen Enden der zuvor beschriebenen druckluftführenden Kanäle (49) der Schwenkbüchse (41). Jede Ringnut (37) ist mit einem unterhalb der Flanschfläche (11), vgl. Figur 2, des Hauptspindelaggregats (10) gelegenen Druckluftanschlusswinkel (38) verbunden.

Oberhalb der Ringnuten (37) verbreitert sich das Wechseladaptergehäuse (21), um dort den C1-Motor (50) adaptieren zu können. Das Vorgelegegetriebe (51) des C1-Motors (50) ist hier z.B. ein Planetengetriebe mit einer Untersetzung ins Langsame von z.B. 1:100.

In eine obere Adaptergehäuseverbreiterung (25) ragt von oben her die Ausgangswelle (52) des Vorgelegegetriebes (51) hinein. Auf der Ausgangswelle (52) sitzt drehstarr ein Ritzelrad (56). Dieses Ritzelrad (56) kämmt mit einer Außenverzahnung (43), die in die radiale Außenfläche des Flanschabschnitts (42) der Schwenkbüchse (41) eingearbeitet ist. Der Grundkreisdurchmesser der Außenverzahnung (43) ist ca. 1,8 mal größer als der Grundkreisdurchmesser des Ritzelrades (56).

Der C1-Motor sitzt auf einem z.B. nahezu planen Adaptergehäusedeckel (26), der das Wechseladaptergehäuse (21) nach oben hin teilweise verschließt, vgl. Figur 5. Zwischen dem Vorgelegegetriebe (51) des C1-Motors (50) und dem Adaptergehäusedeckel (26) befindet sich ein Stützrohr (33).

Wird der C1-Motor (50) bestromt, treibt das Ritzelrad (56) über die Außenverzahnung (43) die Schwenkbüchse (41) an. In Ausnehmungen der unteren Stirnseite der Schwenkbüchse (41) greifen zum Werkzeugschwenkaggregat (90) gehörende, teilweise druckluftführende Stützzapfen (94) ein. Über Kupplungen aus den Ausnehmungen und den Stützzapfen (94) ist das Werkzeugschwenkaggregat (90) mit der Schwenkbüchse (41) spielfrei und drehstarr gekuppelt.

Das Wechseladaptergehäuse (21), vgl. Figur 4, hat im Bereich knapp unterhalb der Ringnuten (37) zwei den Außendurchmesser reduzierende Absätze (22, 23). Der obere Absatz (22) stützt zentriert einen Auskragteller (27) ab, der mit dem Wechseladaptergehäuse (21) starr verschraubt ist.

Am unteren, zweiten Absatz (23) stützt sich mittels einer Wellenmutter (73) ein vorgespannter Verband aus zwei Wälzlagerinnenringe und zwei Distanzhülsen (72) ab. Die Wälzlagerinnenringen gehören zu zwei z.B. gleich großen Dünnringlagern (71), die den Antriebsring (61) der C2-Achse lagern.

Der Antriebsring (61) besteht aus einem Rohrabschnitt (65), einem Flanschbereich (62) und einem Stirnringdeckel (66). Der Rohrabschnitt (65) geht nach oben hin in den Flanschbereich (62) über, wobei dieser sich axial von oben her am Außenring des oberen Dünnringlagers (71) abstützt. Der Flanschbereich (62) erstreckt sich nach oben unter Ausbildung einer Hohlradverzahnung (63) bis zu einem deckel- bzw. plattenartigen Auskragteller (27). Zwischen dem oberen Rand des Flanschbereiches (62) und dem Auskragteller (27) befindet sich eine Labyrinthdichtung (64).

Nach unten hin wird der Rohrabschnitt (65) durch den angeschraubten Stirnringdeckel (66) abgeschlossen. Der Stirnringdeckel (66), an dem auch das gabelförmige Kupplungsstück (67) angeordnet ist, vgl. auch Figur 1 unteres Drittel, umgreift die untere Stirnfläche des Außenringes des unteren Dünnringlagers (71). Die radiale, innen liegende Zylinderfläche des Stirnringdeckels (66) bildet mit der außen liegenden radialen Zylinderfläche der Wellenmutter (73) eine Spaltdichtung (68).

Nach Figur 4 greift in die Hohlradverzahnung (63) des Flanschbereiches (62) ein gerad verzahntes Zwischenrad (84) ein. Letzteres ist z.B. mittels fünf gleich großen Schulterlagern (87) auf einem Flanschbolzen (35) gelagert. Dabei werden die Schulterlager (87) über eine Wellenmutter (36) zur Verringerung der Lagerluft axial vorgespannt. Der Flanschbolzen (35) ist über seinem Flansch von unten her am Wechseladaptergehäuse (21) verschraubt.

In der Durchgangsbohrung des Zwischenrades (84) befindet sich ca. mittig ein Bund (85). Oberhalb des Bundes (85) sind drei Schulterlager (87) so angeordnet, dass jeweils die Axialkräfte der Verspannung über die Schultern der drei Außenringe auf den Bund (85) übertragen werden. Die Schultern der Außenringe der beiden unteren Schulterlager (87) stützen die auf sie wirkenden Axialkräfte an der Unterseite des Bundes (15) ab.

Das Zwischenrad (84) kämmt mit einem auf der Motorwelle (81) des C2-Motors (80) sitzenden Antriebsritzel (86). Folglich nehmen die oberen drei Schulterlager (87) primär die zwischen dem Antriebsritzel (86) und dem Zwischenrad (84) auftretenden Zahnkräfte auf, während die beiden unteren Schulterlager (87) die zwischen dem Zwischenrad (84) und der Hohlradverzahnung (63) wirkenden Zahnkräfte abstützen.

Das Zwischenrad (84) und das Antriebsritzel (86) sitzen in einer unteren Adaptergehäuseverbreiterung (31), deren Hohlraum (32) jedoch von unten her in das Wechseladaptergehäuse (21) eingearbeitet ist. Im unteren Bereich ist der Hohlraum (32) durch den Auskragteller (27) verschlossen.

Der Durchmesser des Wälzkreises der Hohlradverzahnung (63) ist z.B. um den Faktor 4,22 größer als der Durchmesser des Antriebsritzels (86).

Unterhalb der Schwenkbüchse (41) befindet sich das Werkzeugschwenkaggregat (90), vgl. Figur 1. In seinem Schwenkaggregategehäuse (91) ist die Werkzeugaufnahme (120) in dem Schwenkkopf (110) um die horizontale Mittellinie (111) schwenkbar gelagert. Um die Schwenkbewegung zu realisieren, umfasst das Werkzeugschwenkaggregat (90) das Schwenkgetriebe (113), vgl. unten in Figur 4. Dazu weist der Schwenkkopf (110) ein Schneckenrad (114) auf, dessen Mittellinie deckungsgleich zur Schwenkachse (111) des Schwenkkopfes (110) ist. Das Schneckenrad (114) kämmt mit einer Schnecke (116), die als Teil einer wälzgelagerten Nebenwelle (115) im Schwenkaggregategehäuse (91) angeordnet ist. Die Mittellinie (119) der Nebenwelle (115) verläuft parallel zur Mittellinie (19) der Hauptspindel.

Im oberen Bereich trägt die Nebenwelle (115) ein Stirnrad (117), das mit einer Hohlradverzahnung (97) kämmt. Die Hohlradverzahnung (97) ist Teil eines im Schwenkaggregategehäuse (91) wälzgelagerten Umlaufringes (95), der über die Kugellager (98) um die Mittellinie (99) rotierbar im Schwenkaggregategehäuse (91) gelagert ist. Der Umlaufring (95) ist gegenüber dem Schwenkaggregategehäuse (91) oben und unten z.B. mittels Labyrinth- oder Spaltdichtungen abgedichtet.

Nach Figur 1 ist an der Außenwandung des Umlaufringes (95) ein Mitnahmeelement, der Mitnehmerzapfen (96), angeschraubt. Der Mitnehmerzapfen (96) greift in die Gabelnut des Kupplungsstückes (67) des Antriebsringes (61) spielfrei oder zumindest nahezu spielfrei ein. Der Mitnehmerzapfen (96) ist in dem Bereich der Oberflächenstellen, die an den einander gegenüberliegenden Wandungen der Gabelnut anliegen, zumindest bereichsweise ballig geformt.

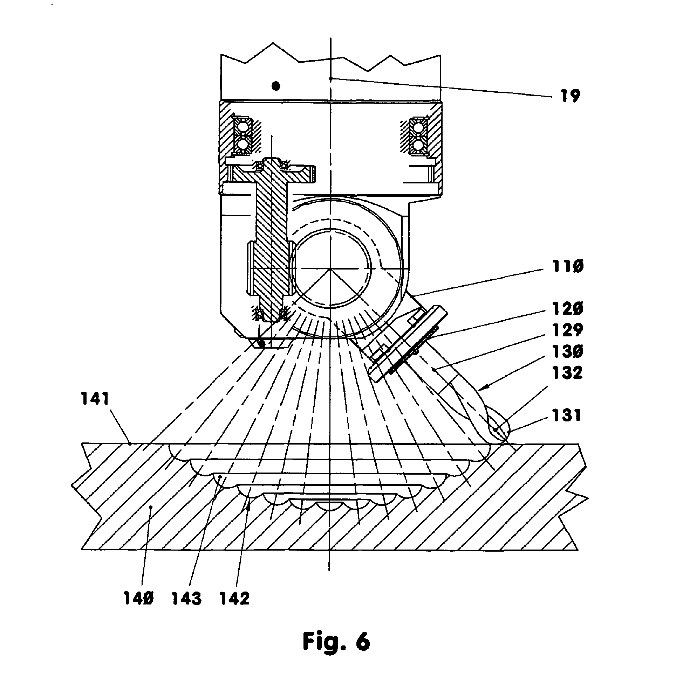

Die Kupplungsstelle Kupplungsstück (67)/Mitnahmezapfen (96) kann ggf. so umgestaltet werden, dass über sie zusätzlich Druckluft oder ein Hydraulikmedium transportiert werden kann, vgl. Kupplungsstelle Schwenkbüchse (41)/Stützzapfen (94). Über Letztere kann ebenfalls ein Hydraulikmedium gefördert werden. Es ist auch denkbar, neben der Druckluft oder dem Hydraulikmedium ein Kühlund/oder Schmiermittel zum Schwenkkopf (110), zur Werkzeugaufnahme (120) oder zum Werkzeug (130), vgl. Figur 6, zu pumpen.

Zwischen den Montagefugen des Doppelschwenkwechseladapters und dem Werkzeugschwenkaggregat (90) können auch elektrische Schnittstellen zur Übertragung von Laststrom oder von Signalen vorgesehen werden.

Soll nun für einen Umrüstvorgang oder für eine Werkstückbearbeitung die Werkzeugaufnahme (120), aus der in Figur 1 gezeigten Position, um z.B. 45 Winkelgrade in die in Figur 4 dargestellte Position verschwenkt werden, wird z.B. bei blockierter Hauptspindel und bei blockiertem C1-Antrieb (40) der C2-Motor (80) bestromt. Das Antriebsritzel (86) versetzt über das Zwischenrad (84) den Antriebsring (61) über dessen Hohlradverzahnung (63) in eine Drehbewegung um die Mittellinie (19) der Hauptspindel. Der Antriebsring (61) überträgt die Rotationsbewegung mittels des gabelförmigen Kupplungsstücks (67) auf den Mitnehmerzapfen (96) des werkzeugschwenkaggregateseitigen Umlaufringes (95). Die Hohlradverzahnung (97) des Umlaufringes (95) dreht über das Stirnrad (117) die Nebenwelle (115) und damit auch die Schnecke (116). Die rotierende Schnecke (116) versetzt das mit dem Schwenkkopf (110) gekuppelte Schneckenrad (114) in eine Schwenkbewegung. Die Werkzeugaufnahme (120) wird somit um die horizontale Mittellinie (111) verschwenkt.

Diese Schwenkbewegung der Kombination aus Schwenkkopf (110) und Werkzeugaufnahme (120) funktioniert auch bei einer unter Last stehenden - sich um ihre eigene geometrische Achse bzw. Mittellinie (129) rotierenden - Werkzeugaufnahme (120).

Dazu ist nach Figur 5, unten, die Hauptspindel über den Hohlschaftkegel (93) mit der zentralen im Schwenkaggregatgehäuse (91) wälzgelagerten Aggregatespindel (92) gekuppelt. Die Mittellinie der Aggregatespindel (92) ist deckungsgleich zur Mittellinie (19) der Hauptspindel. Am unteren Ende der Aggregatespindel (92) ist ein Planrad (101) drehstarr angeflanscht.

Unterhalb des Planrades (101) befindet sich gemäß Figur 5 die Lagerwelle des Schwenkkopfes (110). Sie wird hier symbolisch durch die Mittellinie (111) repräsentiert, die zugleich die Schwenkachse des Schwenkkopfes (110) ist. Auf der konkret nicht dargestellten Lagerwelle sitzt wälzgelagert ein sogenanntes Kombirad (103). Letzteres ist eine z.B. einteilige Kombination aus einem Kombistirnrad (104) und einem Kombiplanrad (105). Das Kombistirnrad (104) kämmt mit dem Planrad (101) der Aggregatespindel (92). Das Kombiplanrad (105) wiederum ist mit einem Abtriebsstirnrad (121) verzahnt, das auf der Welle der Werkzeugaufnahme (120) drehstarr gelagert ist. Die Welle der Werkzeugaufnahme (120) selbst sitzt wälzgelagert im Schwenkkopf (110) und rotiert um die Mittellinie (129), vgl. Figur 4, unten. Die hier verwendeten Verzahnungspaarungen Planrad/Stirnrad können auch durch entsprechende Kegelrad/Kegelrad-Paarungen ersetzt werden.

Folglich treibt die Hauptspindel die Werkzeugaufnahme (120) über das Planrad (101) und das Kombirad (103) an. Die Rotationsbewegung der Werkzeugaufnahme (120) um die Mittellinie (129) wird also nicht unterbrochen, wenn die Werkzeugaufnahme (120) als Teil des Schwenkkopfes (110) um die A-Achse bzw. die Mittellinie (111) schwenkt.

Somit kann z.B. bei einem Fräsvorgang der rotierende Fräser bei einer Rotation des Werkzeugschwenkaggregats (90) um die Mittellinie (19) der Hauptspindel gedreht und zugleich um die Schwenkachse (111) des Schwenkkopfes (110) verschwenkt werden.

Ein rein theoretisches Beispiel für einen derartigen Bearbeitungsvorgang ist die Herstellung einer sphärischen Vertiefung (142) in einer planen Holzplatte (140), vgl. Figur 6. Die herauszuarbeitende Vertiefung (142) soll in erster Näherung eine Raumfläche in Form einer negativen Kugelkappe haben. In der Werkzeugaufnahme (120) wird dazu ein Gesenkfräser (130) mit runder Stirn (131) nach DIN 1889 BB eingespannt. Die Hauptspindel wird gegenüber der Holzplatte (140) so ausgerichtet, dass der Gesenkfräser die unbearbeitete, ebene Holzplattenoberfläche (141) mit der Fräserstirn (131) gerade berührt, wenn der Schwenkkopf (110) um 45 Winkelgrade aus der Senkrechten geschwenkt ist, vgl. auch Schwenkkopfposition nach Figur 4. Nun werden die die Hauptspindel tragenden Maschinenschlitten der Werkzeugmaschine blockiert.

Das Herausarbeiten der Kugelkappe erfolgt nun ausschließlich mittels des Hauptspindelantriebs sowie der C1- und C2-Antriebe. Zunächst rotiert die Mittellinie (129) des Gesenkfräsers (130) auf dem Mantel eines Kegels, der einen Spitzenwinkel von 90 Winkelgrade hat. Der Antriebsring (61) und die Schwenkbüchse (41) rotieren mit gleicher Winkelgeschwindigkeit. Bei dieser ersten Umdrehung erfolgt noch kein Materialabtrag.

Nach dieser Umdrehung wird nun der Spitzenwinkel über den C2-Antrieb um z.B. 12 Winkelgrade auf 78 Winkelgrade verringert. Dazu ändert der C2-Motor kurzfristig seine Drehzahl, um dann wieder den Antriebsring (61) und die Schwenkbüchse (41) mit gleicher Winkelgeschwindigkeit rotieren zu lassen. Bei jeder weiteren Umdrehung werden durch eine kurzzeitige C2-Motordrehzahländerung jeweils wieder 12 Winkelgrade vom Spitzenwinkel des Kegels, auf dem die Mittellinie (129) umläuft, subtrahiert. Nach 8 Umdrehungen weist die Holzplatte (140) zumindest annähernd eine kugelkappenförmige Vertiefung (142) auf. Die Hüllfläche der kugelkappenförmige Vertiefung (142) ist ein Kugelabschnitt. Die Höhe des Kugelabschnitts entspricht der maximalen Tiefe der Ausfräsung.

Bei dem beschriebenen Bewegungsablauf bewegt sich die geometrische Mitte der halbrunden Fräserstirn (131) pro Schwenkbüchsenumdrehung auf z.B. 355 Winkelgraden auf einer Ebene, um dann auf einem Bogenstück, das entsprechend einen Winkel von fünf Winkelgraden einschließt, auf eine tiefere Ebene zu schwenken. Dieses gestufte Abtragen, das sich in Figur 6 in Form von kreisförmigen Rillen (143) zeigt, die zudem parallel zur Plattenoberfläche (141) ausgerichtet sind, kann durch eine entsprechende Programmierung der Steuerung der C1- und C2-Motoren (50, 80) in ein kontinuierliches Abtragen gewandelt werden. Hierbei wird die geometrische Mitte (132) der halbrunden Fräserstirn (131) schraubenförmig von oben und außen nach unten und innen bewegt, wobei als innen die Nähe zur Mittellinie (19) bezeichnet wird. Damit fallen die jeweils kurzzeitig zwischengeschalteten Übergänge zwischen den einzelnen horizontalen Rillen (143) weg.

Für diese Arbeitsabläufe benötigen die C1- und C2-Motoren, in der Regel Servomotoren, jeweils ein digital-absolutes Drehwinkelmesssystem, sodass im Zusammenwirken mit der Motoren- bzw. Maschinensteuerung zu jedem Zeitpunkt die absolute Winkellage der Schwenkbüchse (41) und des Antriebsringes (61) gegenüber der Mittellinie (19) der Hauptspindel bekannt sind.

Der Doppelschwenkwechseladapter und das Werkzeugschwenkaggregat (90) weisen eine Vielzahl von Zahnradgetrieben (55, 83, 100, 113) auf. Zumindest ein Teil der Getriebe (55, 83, 100, 113) kann z.B. über an den Gehäusen (21, 91) angeordnete Minimalmengenöler, z.B. in bestimmten Zeitabständen, durch Vernebeln von Schmiermitteltropfen geschmiert werden.

### Bezugszeichenliste:

- 10: Hauptspindelaggregat
- 11: Flanschfläche
- 12: Gehäuse, Hauptspindelgehäuse
- 15: Gehäusebund
- 19: Mittellinie der Hauptspindel

- 20: Doppelschwenkwechseladapter
- 21: Wechseladaptergehäuse, Gehäuse
- 22: Absatz, oberer, erster
- 23: Absatz, unterer, zweiter
- 25: Adaptergehäuseverbreiterung, oben
- 26: Adaptergehäusedeckel
- 27: Auskragteller

- 31: Adaptergehäuseverbreiterung, unten
- 32: Hohlraum
- 33: Stützrohr

- 35: Flanschbolzen (für C2-Getriebe)
- 36: Wellenmutter
- 37: Ringnuten, z.B. vier
- 38: Druckluftanschlusswinkel

- 40: erster Antrieb, C1-Antrieb
- 41: Schwenkbüchse
- 42: Flanschabschnitt
- 43: Außenverzahnung
- 44: Rohrabschnitt

- 45: Bodenabschnitt
- 47: Festlager
- 48: Loslager, Rillenkugellager
- 49: Kanalsystem, Kanäle

- 50: C1-Motor; Servomotor (ggf. mit Tachogenerator)
- 51: Vorgelegegetriebe, antriebsgehäuseintern; Planetengetriebe, Getriebe
- 52: Ausgangswelle

- 55: Vorgelegegetriebe, extern
- 56: Ritzelrad

- 60: zweiter Antrieb, C2-Antrieb
- 61: Antriebsring
- 62: Flanschbereich
- 63: Hohlradverzahnung
- 64: Labyrinthdichtung
- 65: Rohrabschnitt
- 66: Stirnringdeckel
- 67: Kupplungsstück, gabelförmig
- 68: Spaltdichtung

- 71: Wälzlager, Dünnringlager
- 72: Distanzhülsen
- 73: Wellenmutter

- 80: C2-Motor; Servomotor (ggf. mit Tachogenerator)
- 81: Motorwelle
- 83: Hohlradgetriebe, Getriebe
- 84: Zwischenrad
- 85: Bund, Bohrungsbund
- 86: Antriebsritzel
- 87: Wälzlager, Schulterlager
- 88: Distanzring

- 90: Werkzeugschwenkaggregat
- 91: Schwenkaggregatgehäuse, Gehäuse
- 92: Aggregatespindel
- 93: Hohlschaftkegel

- 94: Stützzapfen, ggf. druckluftführend
- 95: Umlaufring, Antriebselement
- 96: Mitnahmeelement, Mitnehmerzapfen
- 97: Hohlradverzahnung
- 98: Kugellager
- 99: Mittellinie

- 100: Getriebe für Werkzeugrotation
- 101: Planrad
- 103: Kombirad
- 104: Kombistirnrad
- 105: Kombiplanrad

- 110: Schwenkkopf
- 111: Schwenkachse, Mittellinie, A-Achse, horizontal

- 113: Schwenkgetriebe, Getriebe
- 114: Schneckenrad
- 115: Nebenwelle, wälzgelagert
- 116: Schnecke
- 117: Stirnrad
- 119: Mittellinie

- 120: Werkzeugaufnahme
- 121: Abtriebsstirnrad
- 129: Mittellinie
- 130: Werkzeug, Gesenkfräser
- 131: Fräserstirn, halbkugelförmig
- 132: geometrische Mitte der Fräserstirn

- 140: Werkstück, Holzplatte
- 141: Werkstückoberfläche, plan
- 142: Vertiefung, kugelkappenförmig
- 143: Rillen

## Patentansprüche

1. Doppelschwenkwechseladapter zum austauschbaren Einwechseln eines Werkzeugschwenkaggregats (90) in ein Hauptspindelaggregat (10), mit einem Werkzeugschwenkaggregat (90), das einen in einem Schwenkaggregategehäuse (91) gelagerten Schwenkkopf (110) hat, in dem eine antreib- und drehbare Werkzeugaufnahme (120) angeordnet ist, wobei der Schwenkkopf (110) im Schwenkaggregategehäuse (91) mittels eines Schwenkgetriebes (113) um eine quer zur Mittellinie (99) der Aggregatespindel (92) des Werkzeugschwenkaggregats (90) orientierte Schwenkachse (111) um mindestens 110 Winkelgrade schwenkbar ist, wobei
der Doppelschwenkwechseladapter einen ersten Antrieb (40) hat, der das Werkzeugschwenkaggregat (90) um die Mittellinie (99) der Aggregatespindel (92) in jeder Rotationsrichtung um jeden beliebigen Schwenkwinkel schwenkbar macht, wobei der Schwenkwinkel gleich groß oder größer ist, als der kleinste ansteuer- oder ausregelbare Verstellwinkel dieses Antriebs (40), **dadurch gekennzeichnet**
- **dass** der Doppelschwenkwechseladapter einen zweiten Antrieb (60) hat, der ein an einem Antriebselement (95) des schwenkkopfeigenen Schwenkgetriebes (113) ankuppelbares Mitnahmeelement (96) in jeder Rotationsrichtung um die Mittellinie (99) der Aggregatespindel (92) um jeden beliebigen Schwenkwinkel schwenkbar macht, der gleich groß oder größer ist als der kleinste ansteuer- oder ausregelbare Verstellwinkel dieses Antriebs (60) und
- **dass** die beiden Antriebe (40, 60) synchron und asynchron zueinander antreibbar sind.

2. Doppelschwenkwechseladapter gemäß Anspruch 1, **dadurch gekennzeichnet, dass** die Mittellinie (19) der Hauptspindel des Hauptspindelaggregats (10) zur Mittellinie (99) der Aggregatespindel (92) fluchtet.

3. Doppelschwenkwechseladapter gemäß Anspruch 1, **dadurch gekennzeichnet, dass** der erste Antrieb (40) eine Schwenkbüchse (41) antreibt, die auf dem Gehäuse (12) des Hauptspindelaggregats (10) wälzgelagert ist.

4. Doppelschwenkwechseladapter gemäß Anspruch 3, **dadurch gekennzeichnet, dass** die Schwenkbüchse (41) eine Mittellinie hat, die mit der Mittellinie (19) des Hauptspindelaggregats (10) deckungsgleich ist.

5. Doppelschwenkwechseladapter gemäß Anspruch 1, **dadurch gekennzeichnet, dass** der zweite Antrieb (60) einen Antriebsring (61) antreibt, der auf einem zumindest bereichsweise rohrförmigen Wechseladaptergehäuse (21) wälzgelagert ist.

6. Doppelschwenkwechseladapter nach einem der vorangegangenen Ansprüche, **dadurch gekennzeichnet, dass** die Mittellinien der Schwenkbüchse (41) und des Antriebsringes (61) deckungsgleich sind und dass die Längsausdehnung des Antriebsringes (61) - gemessen in Richtung der Mittellinie (19) des Hauptspindelaggregats (10) - sich innerhalb der Längsausdehnung der Schwenkbüchse (41) befindet.

7. Doppelschwenkwechseladapter nach einem der vorangegangenen Ansprüche, **dadurch gekennzeichnet, dass** die untere Stirnfläche der Schwenkbüchse (41) weniger als 10 Millimeter von der unteren Stirnfläche des Antriebsringes (61) entfernt ist.

8. Doppelschwenkwechseladapter gemäß Anspruch 1, **dadurch gekennzeichnet, dass** das Getriebe (83) des zweiten Antriebs (60) ein Hohlradgetriebe ist.

## Claims

1. Dual pivoting exchange adapter for the replaceable exchange of a tool pivoting unit (90) into a main spindle unit (10), comprising a tool pivoting unit (90) having a pivoting head (110) mounted in a pivoting unit housing (91) and accommodating a tool holder (120) adapted to be driven and rotated, said pivoting head (110) being pivotable in the pivoting unit housing (91) by means of a pivoting transmission (113) by at least 110 degrees of an angle about a pivoting axis (111) oriented transversely to centre line (99) of unit spindle (92) of tool pivoting unit (90), said dual pivoting exchange adapter comprising first driving means (40) rendering tool pivoting unit (90) pivotable by any pivoting angle in either direction about centre line (99) of unit spindle (92), said pivoting angle being equal to or greater than the smallest settable or regulatable adjustment angle of said driving means (40), **characterized in that**
- said dual pivoting exchange adapter comprises second driving means (60) adapted to render an entrainment element (96) pivotable in either direction by any pivoting angle equal to or greater than the smallest settable or regulatable adjustment angle of said driving means (60) about centre line (99) of aggregate spindle (92), said entrainment element (95) being adapted to be coupled with the pivoting transmission (113) associated with said pivoting head, and **in that**
- both driving means (40, 60) are adapted to be driven synchronously and asynchronously with each other.

2. Dual pivoting exchange adaptor as claimed in claim 1, **characterized by** centre line (19) of the main spindle of main spindle unit (10) being aligned with centre line (99) of unit spindle (92).

3. Dual pivoting exchange adaptor as claimed in claim 1, **characterized by** said first driving means (40) driving a pivoting sleeve (41) mounted in rolling-contact bearings on housing (12) of main spindle unit (10).

4. Dual pivoting exchange adaptor as claimed in claim 3, **characterized in that** pivoting sleeve (41) has a centre line congruent with centre line (19) of main spindle unit (10).

5. Dual pivoting exchange adaptor as claimed in claim 1, **characterized in that** second driving means (60) moves a driving ring (61) mounted in rolling-contact bearings on an exchange adaptor housing (21) designed to be tubular at least section-wise.

6. Dual pivoting exchange adaptor as claimed in any one of the preceding claims, **characterized in that** the centre lines of pivoting sleeve (41) and of driving ring (61) are congruent and **in that** the longitudinal dimension of driving ring (61), measured in the direction of centre line (19) of main spindle unit (10), lies within the longitudinal dimension of pivoting sleeve (41).

7. Dual pivoting exchange adaptor as claimed in any one of the preceding claims, **characterized in that** the bottom face of pivoting sleeve (41) is less than 10 millimeters distant from the bottom face of driving ring (61).

8. Dual pivoting exchange adaptor as claimed in claim 1, **characterized in that** transmission (83) of second driving means (60) comprises internally geared wheels.

## Revendications

1. Double adaptateur pivotant amovible permettant le remplacement d'une unité pivotante pour outils (90) dans une unité de broche principale (10), présentant une unité pivotante pour outils (90) équipée d'une tête pivotante (110) logée dans un boîtier (91) et dans laquelle est disposé un porte-outil (120) monté de manière à être entraîné et à tourner, la tête pivotante (110) pouvant pivoter dans ledit boîtier (91), à l'aide d'un engrenage pivotant (113), d'au moins 110 degrés autour d'un axe de pivotement (111) orienté transversalement par rapport à la ligne médiane (99) de la broche porte-outil (92) de l'unité pivotante pour outils (90), le double adaptateur pivotant amovible étant équipé d'un premier entraînement (40) qui permet à l'unité pivotante pour outil (90), de pivoter autour de la ligne médiane (99) de la broche porte-outil (92) dans chaque sens de rotation selon n'importe quel angle de pivotement, l'angle de pivotement étant égal ou supérieur au plus petit angle de réglage de cet entraînement (40) qui peut être commandé ou piloté, **caractérisé en ce**
- **que** le double adaptateur pivotant amovible est équipé d'un deuxième entraînement (60) qui permet à un élément d'entraînement accouplable (96) à un élément moteur (95) de l'engrenage pivotant (113) propre à la tête pivotante de pivoter autour de la ligne médiane (99) de la broche porte-outil (92) dans chaque sens de rotation selon n'importe quel angle de pivotement égal ou supérieur au plus petit angle de réglage de cet entraînement (60) qui peut être piloté ou commandé et
- **que** les deux entraînements (40, 60) peuvent être entraînés de manière synchrone et asynchrone l'un par rapport à l'autre.

2. Double adaptateur pivotant amovible selon la revendication 1, **caractérisé en ce que** la ligne médiane (19) de la broche principale de l'unité de broche principale (10) est alignée avec la ligne médiane (99) de la broche porte-outil (92).

3. Double adaptateur pivotant amovible selon la revendication 1, **caractérisé en ce que** le premier entraînement (40) entraîne un manche de pivotement (41) qui est monté sur palier à roulement du boîtier (12) de l'unité de broche principale (10).

4. Double adaptateur pivotant amovible selon la revendication 3, **caractérisé en ce que** le manchon de pivotement (41) a une ligne médiane qui coïncide avec la ligne médiane (19) de l'unité de broche principale (10).

5. Double adaptateur pivotant amovible selon la revendication 1, **caractérisé en ce que** le deuxième entraînement (60) entraîne une bague d'entraînement (61) qui est monté sur palier à roulement sur un boîtier d'adaptateur amovible (21) de forme au moins partiellement tubulaire.

6. Double adaptateur pivotant amovible selon l'une des revendications précédentes, **caractérisé en ce que** les lignes médianes du manchon de pivotement (41) et de la bague d'entraînement (61) coïncident et que l'étendue longitudinale de la bague d'entraînement (61), mesurée dans la direction de la ligne médiane (19) de l'unité de broche principale (10), se trouve à l'intérieur de l'étendue longitudinale du manchon de pivotement (41).

7. Double adaptateur pivotant amovible selon l'une des revendications précédentes, **caractérisé en ce que** la face frontale inférieure du manchon de pivotement (41) se trouve à moins de 10 millimètres de la face frontale inférieure de la bague d'entraînement (61).

8. Double adaptateur pivotant amovible selon la revendication 1, **caractérisé en ce que** l'engrenage (83) du deuxième entraînement (60) est un engrenage à roue creuse.
